(19) Europäisches Patentamt / European Patent Office / Office européen des brevets

(11) **EP 1 455 496 B1**

(12) **EUROPÄISCHE PATENTSCHRIFT**

(45) Veröffentlichungstag und Bekanntmachung des Hinweises auf die Patenterteilung:
**30.05.2007 Patentblatt 2007/22**

(51) Int Cl.:
***H04L 12/66*** *(2006.01)*

(21) Anmeldenummer: **03004653.6**

(22) Anmeldetag: **03.03.2003**

(54) **Bestimmung von Eigenschaften beim Übergang zwischen einer AAL2-Signalisierung und einer weiteren Signalisierung**

Determination of the characteristics at the transition of AAL2-signalling to another further signalling

Détermination des caratéristiques lors de la transition de la signalisation du protocol AAL2 vers une autre signalisation de protocole

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**08.09.2004 Patentblatt 2004/37**

(73) Patentinhaber: **SIEMENS AKTIENGESELLSCHAFT 80333 München (DE)**

(72) Erfinder: **Pfeil, Bernhard 81669 München (DE)**

(56) Entgegenhaltungen:
**WO-A-01/13599**

• **IAN RYTINA: "TSG-RAN MEETING #18 including attachment 2 (Q.AAL2IPiw.CS1)" ITU-T TSG-RAN MEETING #18, [Online] 6. Dezember 2002 (2002-12-06), Seiten 1-28, XP002246432 Gefunden im Internet: <URL:http://www. 3gpp.org/ftp/tsg_ran/tsg_r an/TSGR_ 18/Docs/PDF/RP-020833.pdf> [gefunden am 2003-07-02]**
• **"AAL type 2 signalling protocol - Capability set 1" ITU_T Q.2630.1, [Online] Dezember 1999 (1999-12), XP002246433 Gefunden im Internet: <URL:http://www.ihserc.com/specs3/controll er/ controller?event=SHARED_DOC_ CHECK&prod= SPECS3&sess=70628203&LOGINNAME=null&li nkSo urce=SEARCH&page=doc&docId=NHDMPAAAA AAAAAA A> [gefunden am 2003-07-02]**
• **"AAL2 signalling protocol - Capability set 2" ITU-T Q.2630.2, [Online] Dezember 2000 (2000-12), XP002246434 Gefunden im Internet: <URL:http: //www.ihserc.com/specs3/controll er/controller? event=SHARED_DOC_CHECK&prod= SPECS3&sess=70628203&LOGINNAME=null&li nkSo urce=SEARCH&page=doc&docId=DHUVWAAA AAAAAAA A> [gefunden am 2003-07-02]**
• **"Support of IP-based services using IP transfer capabilities" ITU-T Y.1241, [Online] März 2001 (2001-03), XP002246577 Gefunden im Internet: <URL:http://www.ihserc.com/specs3/controll er/ controller?event=SHARED_DOC_ CHECK&prod= SPECS3&sess=87082836&LOGINNAME=null&li nkSo urce=SEARCH&page=doc&docId=IIJCTAAAAA AAAAA A> [gefunden am 2003-07-04]**
• **"ATM UNI Signalling specification V4.1" THE ATM FORUM TECHICAL COMMITTEE, [Online] April 2002 (2002-04), XP002246578 Gefunden im Internet: <URL:ftp://ftp.atmforum.com/pub/ approved-s pecs/af-sig-0061.002.pdf> [gefunden am 2003-07-04]**
• **ENEROTH G ET AL: "APPLYING ATM/AAL2 AS A SWITCHING TECHNOLOGY IN THIRD-GENERATION MOBILE ACCESS NETWORKS" IEEE COMMUNICATIONS MAGAZINE, IEEE SERVICE CENTER. PISCATAWAY, N.J, US, Bd. 37, Nr. 6, Juni 1999 (1999-06), Seiten 112-122, XP000835287 ISSN: 0163-6804**

**Beschreibung**

Bestimmung von Eigenschaften beim Übergang zwischen einer AAL2-Signalisierung und einer weiteren Signalisierung

Die Erfindung betrifft ein Verfahren und eine Vorrichtung für den Übergang eines AAL2-Signalisierungsprotokolls in mindestens ein weiteres Signalisierungsprotokoll mindestens eines Kommunikationsnetzes.

Das Dokument D1 (Ian Rytina, "TSG-RAN Meeting #18 including attachment 2 (Q.AAL21Piw.CS1)" ITU-T TSG-RAN Meeting #18, [Online] 6. Dezember 2002 (2002-12-06), Seiten 1-28, Interworking between AAL type 2 Signalling Protocol Capability Set 2 and IPALCAP Signalling Protocol Capability Set 1) definiert das Zusammenwirken zwischen dem AAL Typ 2 Signalisierungsprotokoll Eigenschaften Set 2 und dem IPALCAP Signalisierungsprotokoll. Das Zusammenwirken zwischen den beiden Signalisierungsprotokollen tritt üblicherweise in den 3GPP Zugangsnetzen (UTRANs) mit AAL Typ 2 und IP Netzeinheiten auf, die über eine "Zusammenwirken"-Einheit (Interworking-unit) verbunden sind.

Das Dokument D2 (WO 01/13599 A2) beschreibt ein Verfahren und eine Vorrichtung zum Bereitstellen einer "Zusammenwirken"-Einheit zwischen ATM-Netzen und IP-Netzen. Eine Gateway-Einheit wird zum Verbinden eines ATM (AAL 2) basierten Zugangs-/Kernnetz mit einem IP-Netz bereitgestellt. Die Gateway-Einheit agiert als Schnittstelle zwischen dem ersten und dem zweiten Netz. Dabei nutzt das erste Netz eine erste Signalisierung und das zweite Netz nutzt eine zweite Signalisierung und die Schnittstelle übersetzt die Signalisierung zwischen dem ersten und dem zweiten Netz. Die Schnittstelle beinhaltet weiter eine Steuer-Ebene zum Übersetzen der Signalisierung zwischen dem ersten und dem zweiten Netz und/oder eine Benutzer-Ebene zum Konvertieren von Nutzerdaten von der ersten Signalisierung zur zweiten Signalisierung. Die Steuer-Ebene bildet Dienste zwischen dem ersten und dem zweiten Netz ab und übermittelt die Dienste zwischen dem ersten und dem zweiten Netz. Die Schnittstelle beinhaltet zumindest ein Schnittstellen- und ein Multiplexmodul.

Bei der ITU-T wird unter der Arbeitsbezeichnung Q.IPC.CS1 ein Signalisierungsprotokoll für IP Verbindungen ("IP connection control protocol") standardisiert. Diese Art der Signalisierung wird insbesondere in IP-basierten sogenannten Funk-Zugangs-Netzwerken (Radio Access Networks) (im weiteren RAN abgekürzt) eingesetzt werden. Dabei ist vorgesehen z. B. mittels einer sogenannten Inter-Verarbeitungseinheit (Interworking Unit) Netzelemente aus IP-basierten RANs mit solchen aus ATM Adaptation Layer Type 2 (im weiteren AAL2 genannt) basierten RANs zu verbinden. Es ist vorgesehen die Ressourcenanforderungen auf IP-Seite per Parameter-Wert IP-Transfer-Eigenschaften (im weiteren mit IPTC abgekürzt) gemäß ITU-T Empfehlung Y.1221 anzugeben. Dem entsprechen die sogenannten Anschluss-Eigenschaften (im weiteren LC genannt) für die AAL2-Seite, wenn dort die AAL2 Signalisierung gemäß den ITU-T Empfehlungen Q.2630.1 oder Q.2630.2 unterstützt wird. Ebenfalls wird bei der ITU-T unter der Bezeichnung Q.2630 das Signalisierungsprotokoll für ATM Adaptation Layer Type 2 Verbindungen standardisiert. Die Standardisierung erfolgt in aufeinander aufbauenden sogenannten Eigenschaftsmengen (Capability Sets). In der Bezeichnung werden Capability Sets durch Suffixe qualifiziert, so steht z. B. "Q.2630.1" für das Capability Set 1 (im weiteren wird die Abkürzung "CS" für "Capability Set" verwendet). Die Standardisierung für CS1 und CS2 ist abgeschlossen, für CS3 am Laufen. Für das Inter-Verarbeiten stellt sich das Problem zwischen LC- und IPTC-artigen Parametern zu übersetzen. Dies betrifft die Anschluss-Eigenschaften (Link Characteristics) und sogenannte Bevorzugte-Anschluss-Eigenschaften (Preferred Link Characteristics) (im weiteren PLC abgekürzt) bzw. IP-Transfer-Eigenschaften (IP-Transfer Capability) und sogenannte Bevorzugte-IP-Transfer-Eigenschaften (Preferred IP Transfer Capability) (im weiteren PIPTC genannt) in den jeweiligen sogenannten Verbindungsaufbau-Anfrage (Establish Request) Nachrichten sowie die Link Characteristics und IP Transfer Capability in den jeweiligen Modifikations-Anfragen (Modify Request) Nachrichten. Zusätzlich ist noch der sogenannte SSISU Parameter in der Establish Request Nachricht der AAL2 Signalisierung zu berücksichtigen. Ressourcenanforderungen für eine sogenannte AAL2 Verbindung werden in CS1 und CS2 durch die Parameter-Werte Link Characteristics signalisiert. Für CS3 ist vorgesehen Transfer-Eigenschaften (Transfer Capabilities) (im weiteren mit TC abgekürzt) gemäß I.378 zu unterstützen, die in CS3 Netzen die LC vollständig ablösen sollen. Damit stellt sich an Übergängen von CS2 zu CS3 Netzen oder Netzteilen das Problem von CS2 oder CS1 Netzknoten per LC signalisierte Ressourcenanforderungen in TC zu übersetzen. Dies betrifft die Link Characteristics und Preferred Link Characteristics in der Establish Request sowie die Link Characteristics in der Modify Nachricht.

Die Aufgabe der vorliegenden Erfindung besteht deshalb darin, ein Verfahren für den Übergang zwischen einen AAL2-Signalisierungsprotokoll und einem weiteren Signalisierungsprotokoll zu entwickeln.

Die Aufgabe wird erfindungsgemäß durch die Gegenstände der unabhängigen Patentansprüche gelöst. Weiterbildungen der Erfindung sind in den Unteransprüchen angegeben. Kern der Erfindung ist, dass Eigenschaften der Parameter-Werte bestimmt werden und für den Übergang zwischen einen AAL2-Signalisierungsprotokoll und einem weiteren Signalisierungsprotokoll verwendet werden. Die Bestimmung der Eigenschaften erfolgt dabei nach vorher definierten Bedingungen und Regeln.

Ein Vorteil dieser Erfindung ist, dass die vorgestellte Lösung leicht zu implementieren und kosteneffektiv ist.

Die Erfindung wird anhand eines in den Figuren dargestellten Ausführungsbeispiels näher erläutert. Im Einzelnen zeigen

Figur 1     Tabellen der LC, TC, SSISU und IPTC Parameter,

Figur 2     Tabellen der PLC, PTC und PIPTC Parameter,

Figur 3     Bitratenbestimmung für den Übergang von LC bzw. PLC zu TC bzw. PTC,

Figur 4     Umsetzungstabellen beim Empfang von Verbindungsaufbau-Anfragen-Nachrichten und Modifizierungs-Nachrichten,

Figur 5     Bedingungen für die Wahl der Transfer-Eigenschaften Klasse,

Figur 6     Bitratenbestimmung für den Übergang von LC bzw. PLC zu IPTC bzw. PIPTC,

Figur 7     Vorschriften für die Bestimmung der Maximal erlaubten Paketgröße

Figur 8     LC bzw. PLC Bitratenbestimmung zu gegebenen IPTC bzw. PIPTC,

Figur 9     Umsetzungstabellen für die Statistischen-Bandbreiten-Transfer-Eigenschaften (SBW-TC),

Figur 10    Umsetzungstabellen für die Bestimmten-Bandbreiten-Transfer-Eigenschaften (DBW-TC),

Figur 11    Vorschriften für die Bestimmung der Maximalen CPS-SDU Größe und der Mittleren CPS-SDU Größe,

Figur 12    Vorschriften zur Bestimmung des SSISU Parameters,

Figur 13    Bedingungen für die Wahl der IP-Transfer-Eigenschaften Klasse,

Figur 14    Übergang von LC bzw. PLC zu TC bzw. PTC bei einer Verbindungsaufbau-Anfragen-Nachricht,

Figur 15    Übergang von LC bzw. PLC zu TC bzw. PTC bei einer Modifizierungs-Nachricht,

Figur 16    Übergang von LC bzw. PLC zu IPTC bzw. PIPTC bei einer Verbindungsaufbau-Anfragen-Nachricht,

Figur 17    Übergang von IPTC bzw. PIPTC zu LC bzw. PLC bei einer Verbindungsaufbau-Anfragen-Nachricht,

Figur 18    Übergang von LC bzw. PLC zu IPTC bzw. PIPTC bei einer Modifizierungs-Nachricht,

Figur 19    Übergang von IPTC bzw. PIPTC zu LC bzw. PLC bei einer Modifizierungs-Nachricht.

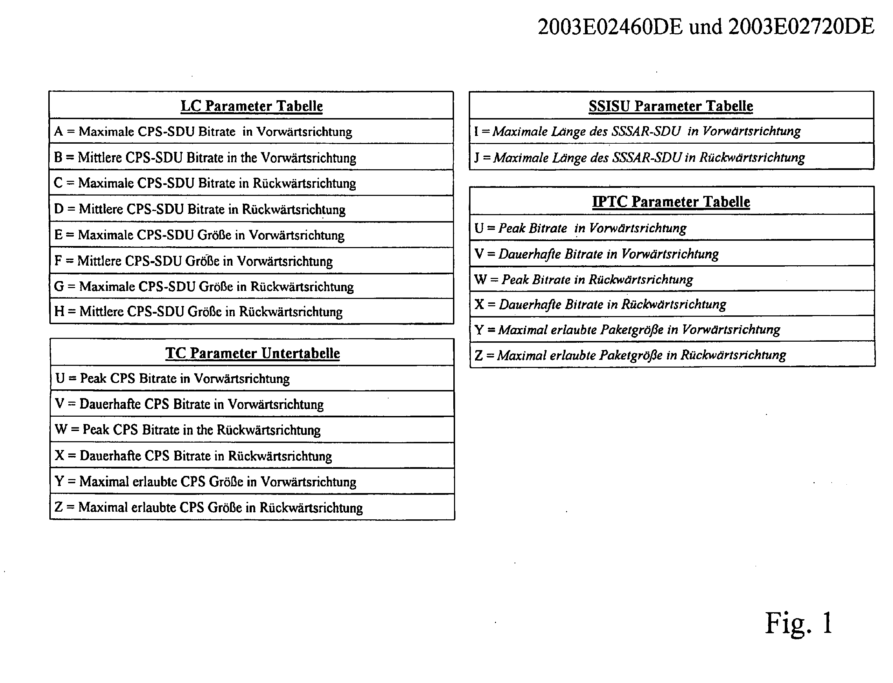

Figur 1 zeigt die Eigenschaften und die in der Anmeldung verwendeten Kurzbezeichnungen von Anschluss-Eigenschaften-Parameter (LC), Transfer-Eigenschaften-Parameter (TC), SSISU-Parameter (SSISU) und IP-Transfer-Eigenschaften-Parameter (IPTC) in Tabellen.

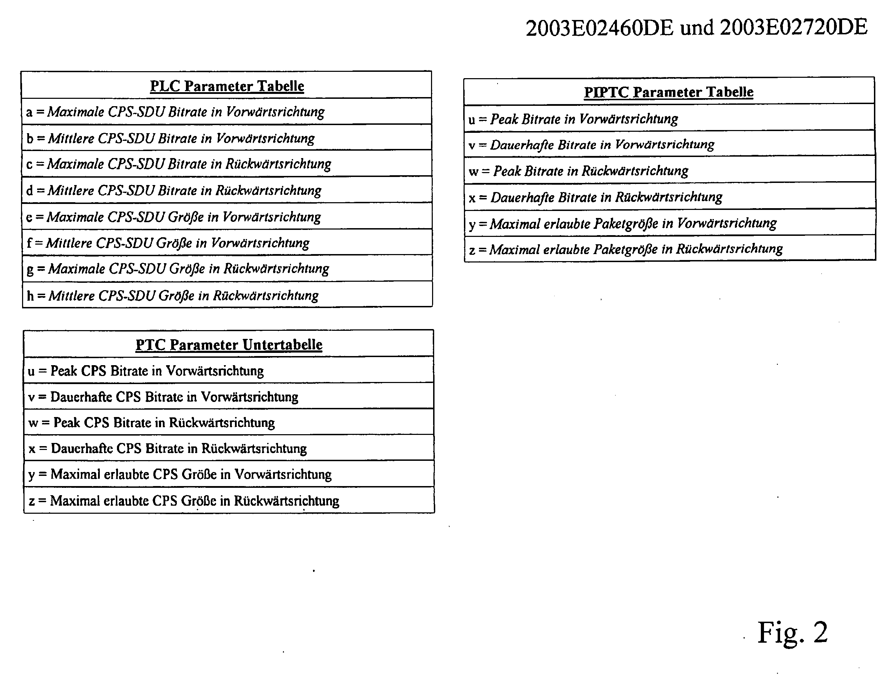

Figur 2 zeigt die Eigenschaften und die in der Anmeldung verwendeten Kurzbezeichnungen von Bevorzugten-Anschluss-Eigenschaften-Parameter (PLC), Bevorzugten-Transfer-Eigenschaften-Parameter (PTC) und Bevorzugten-IP-Transfer-Eigenschaften-Parameter (IPTC) in Tabellen.

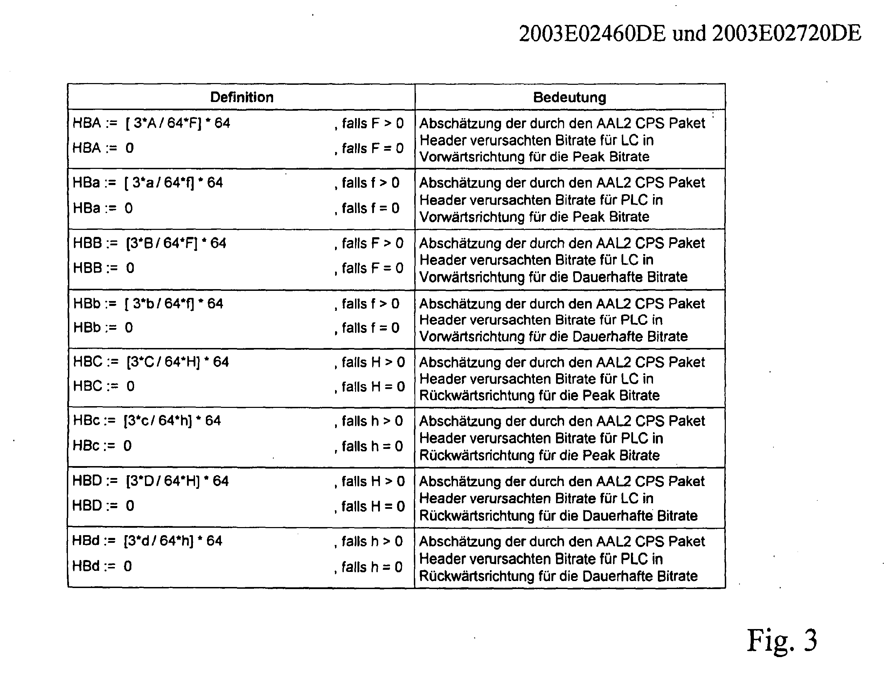

Figur 3 zeigt, wie zur Umsetzung der LC-artigen Bandbreitenangabe auf eine TC-artige Bandbreitenangabe es nötig ist, den durch den ATM Adaption Layer Type 2 (AAL2) Paket Header verursachten Bandbreitenanteil abzuschätzen. Dies erfolgt mittels der Größen in der Tabelle. Als Einheit für die Bitrate wird "Bit pro Sekunde" (bps) und für Größen, wie z. B. einer CPS-SDU wird "octet" in diesem Beispiel verwendet. Die Abschätzung des durch den CPS Paket Header verursachten Bitratenanteils für die Peak CPS Bitraten wird unter Bezug auf die Mittlere CPS-SDU Größe bestimmt. Dies ist erforderlich, da ohne Kenntnis des unterstützten Dienstes nicht davon ausgegangen werden kann, dass die Spitzenbitrate auch nur über CPS Pakete mit der maximalen Größe erzielt wird. Für die Bestimmung der Bitrate wird die Anzahl N der Pakete pro Sekund bei der Peak Rate mit Bezug auf die Mittlere CPS-SDU Größe bestimmt. Die CPS Paket Header Rate wird dann durch die Multiplikation der Anzahl N mit der Länge des CPS Paket Headers errechnet. Danach erfolgt die Normierung auf ganzzahlige Vielfache von 64 bps. Die Normierung auf ganzzahlige Vielfache von 64 bps beruht auf der derzeit in der laufenden Standardisierung angenommenen 64 bps Granularität bei der Signalisierung von Bitraten in IPTC-Parametern.

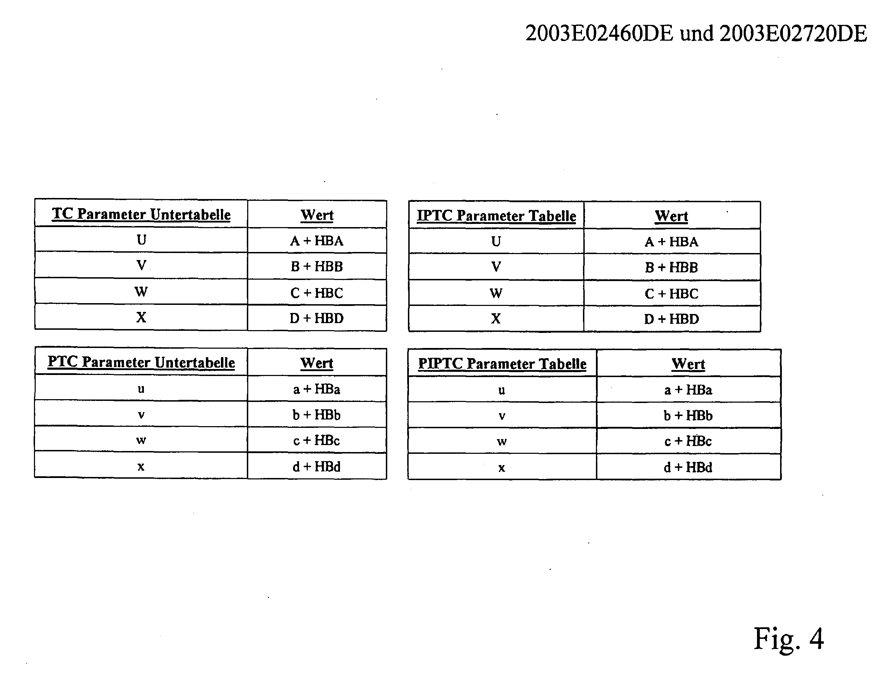

Figur 4 zeigt die aus Figur 3 definierten Umsetzungstabellen. Durch diese Umsetzungstabellen wird u. a. eine untere Grenze für die Spitzenbitratenangaben in den TC bzw. PTC auf Basis gegebener LC bzw. PLC Werte bestimmt, die unter der Annahme der Unkenntnis über den zu unterstützenden Dienst optimiert ist. Diese Umsetzungstabellen für TC und PTC finden ihre Anwendung z. B. in einer AAL2-Schalteinheit 1 bei Empfang von Verbindungsaufbau-Anfragen-Nachrichten (ERQ) und Modifizierungs-Nachrichten (MOD) aus dem CS2 - Netz bzw. -Netzteil, die nicht bereits TC oder PLC Parameter enthalten. Die Umsetzungstabellen für IPTC und PIPTC finden ihre Anwendung z.B. in einer Inter-Verarbeitungseinheit 2 bei Empfang von Verbindungsaufbau-Anfragen-Nachrichten (ERQ) und Modifizierungs-Nachrichten (MOD) aus AAL2-Netzen bzw. -Netzteilen, die gemäß Q.2630.1 oder Q.2630.2 signalisieren.

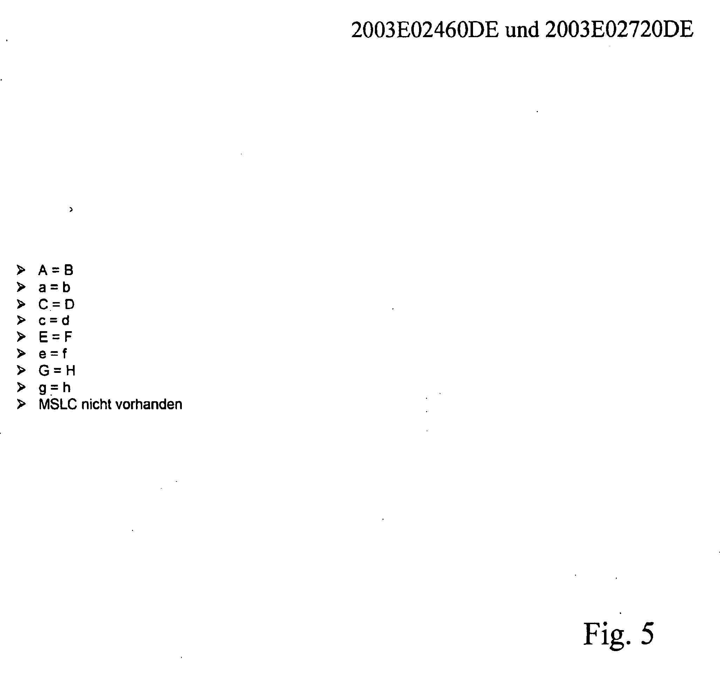

Figur 5 zeigt die Bedingungen für die Wahl der "Festen Bandbreiten Transfer Eigenschaft", falls die Bedingungen hinsichtlich der LC Parameter Werte und des MSLC (Modifizierungs-Unterstützung für Anschluss Eigenschaften) Parameters in der Verbindungsaufbau-Anfragen-Nachrichten (ERQ) aus dem CS2 Netz bzw. Netzteil erfüllt sind. Ist mindestens eine dieser Bedingungen nicht erfüllt, so ist entweder die "Variable Bandbreite - Stringente Transfer Eigenschaft" oder "Variable Bandbreite - Tolerante Transfer Eigenschaft" anzusetzen, wobei diese Auswahl netzspezifisch, z. B. in Abhängigkeit von der Kenntnis über die genutzten Dienste und / oder den gewählten Pfadtyp des für die ankomme Verbindung genutzten AAL2 Pfades, im Netzknoten festzulegen ist. Diese Bestimmung der Transfer Eigenschaften Klasse erfolgt bei Empfang der Verbindungsaufbau-Anfragen-Nachrichten (ERQ) aus dem CS2-Netz bzw. -Netzteil.

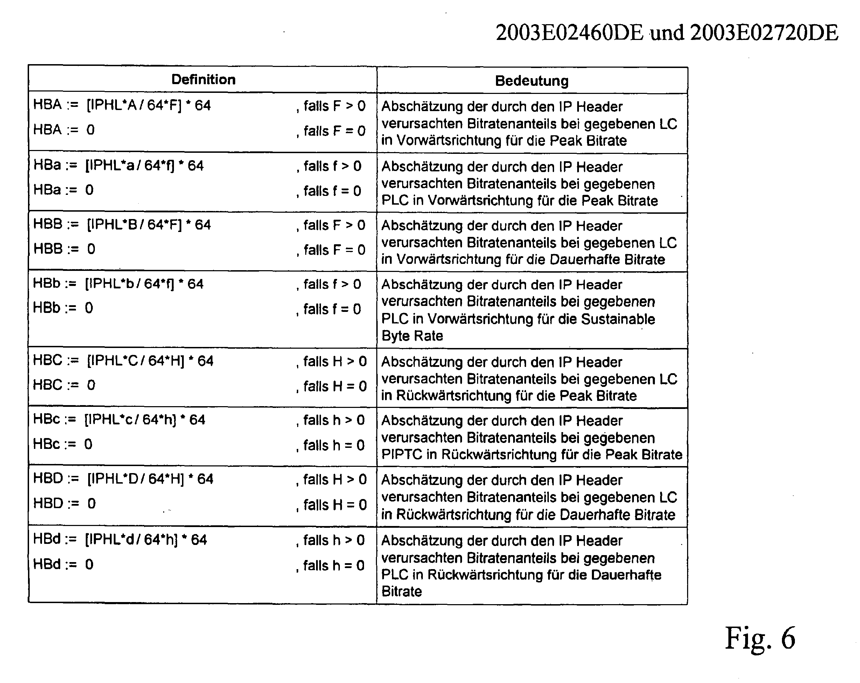

Figur 6 zeigt, wie zur Umsetzung der LC-artigen Bandbreitenangabe auf IPTC-artige es insbesondere nötig ist, den durch den IP Header verursachten Bandbreitenanteil abzuschätzen. Dies erfolgt mittels der Größen, die in der Tabelle enthalten sind. Alle in dieser Tabelle definierten Größen sind in "bit per second" zu verstehen. Die Normierung auf ganzzahlige Vielfache von 64 bps beruht auf der derzeit in der laufenden Standardisierung angenommenen 64 bps Granularität bei der Signalisierung von Bitraten in IPTC Parametern. Wichtig ist hierbei insbesondere, dass für die Abschätzung des durch den IP Header verursachten Bitratenanteils für die Peak CPS-SDU Bitraten, Bezug genommen wird auf die Mittlere CPS-SDU Größe. Dies ist erforderlich, da ohne Kenntnis des unterstützten Dienstes nicht davon ausgegangen werden kann, dass die Spitzenbitrate auch nur über CPS Pakete mit der maximalen Größe erzielt wird. Daher ist für eine gesicherte Abschätzung die jeweilige sogenannte "Mittlere CPS-SDU Größe" heranzuziehen.

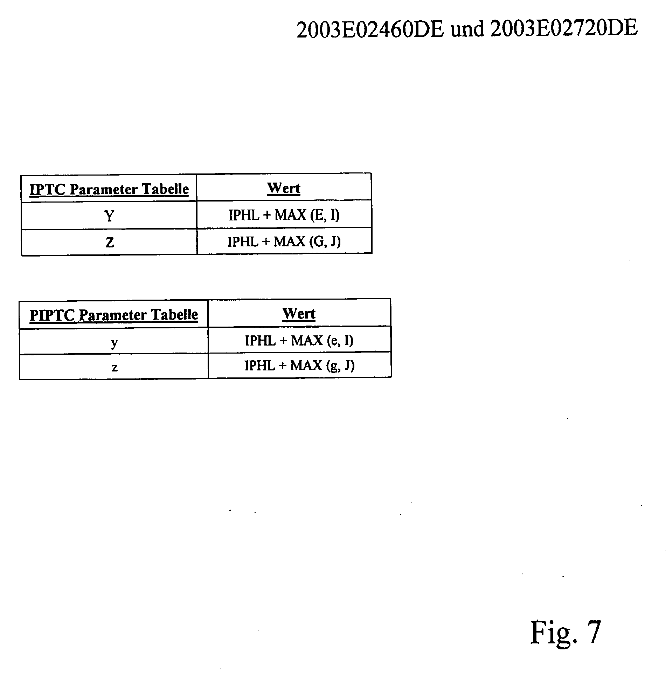

Figur 7 zeigt, wie die Maximal erlaubte Paket Größe bei IPTC und PIPTC Parametern aus den LC, PLC und SSISU Werten bestimmt wird. Diese Umsetzungstabellen finden ihre Anwendung z.B. in einer Inter-Verarbeitungseinheit bei Empfang von Verbindungsaufbau-Anfragen-Nachrichten (ERQ) (IPTC und PIPTC) und Modifizierungs-Nachrichten (MOD) (IPTC) aus AAL2-Netzen bzw. -Netzteilen, die gemäß Q.2630.1 oder Q.2630.2 signalisieren.

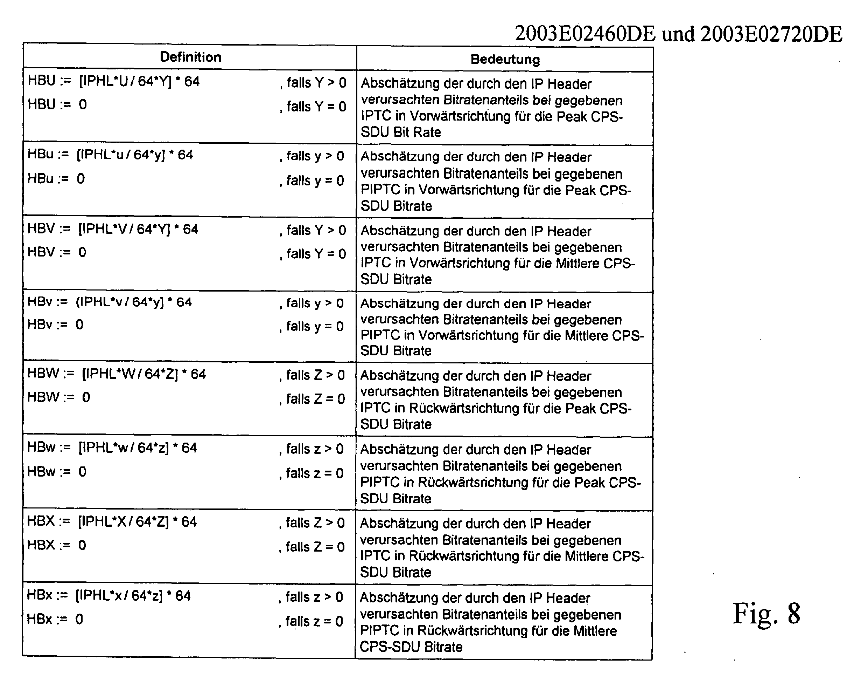

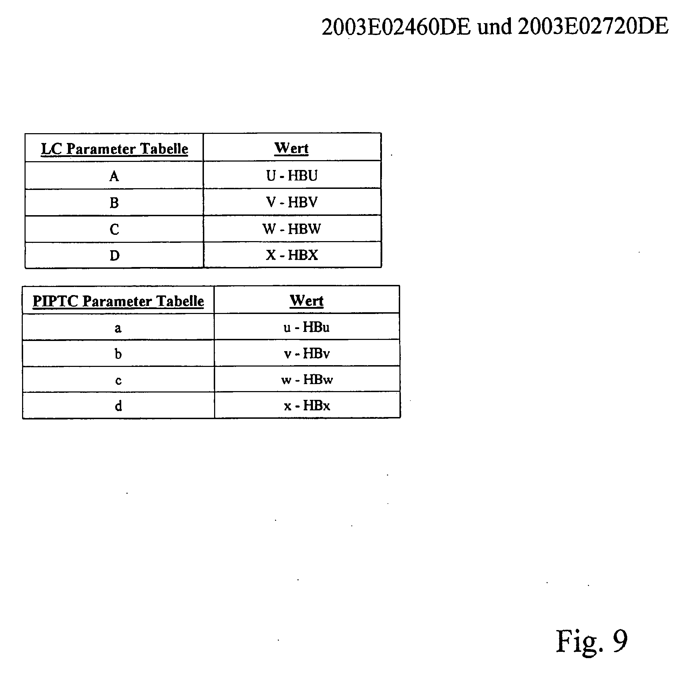

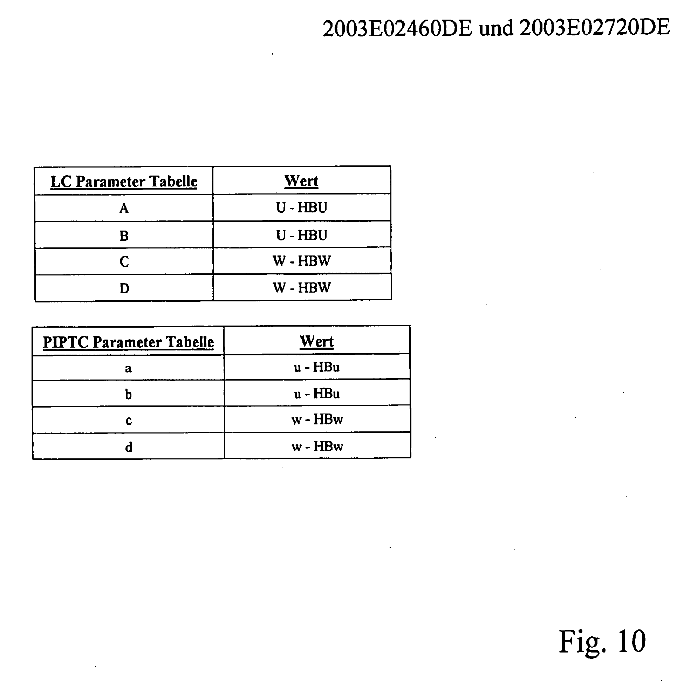

Figur 8 zeigt, wie die IP Header Bitraten zu gegebenen (Bevorzugten) IPTC-Parametern bestimmt werden. Zur Umsetzung der IPTC-artigen Bandbreitenangabe auf LC-artige ist es insbesondere nötig, den durch den IP Header verursachten Bandbreitenanteil abzuschätzen. Dies erfolgt mittels der Größen, die in Figur 8 aufgeführt sind. Dabei ist zu beachten, dass es mehrere Klassen von IP Transfer Eigenschaften gibt, die sich insbesondere auch durch die von ihnen festgelegten Angaben über Bitraten unterscheiden. Die Tabelle ist hier generisch zu sehen. Welche Größen tatsächlich relevant und zu bestimmen sind, wird in den Tabellen in Figur 9 und 10 für die Statistische und die Bestimmte Bandbreiten Transfer Eigenschaft festgelegt. Alle in dieser Tabelle definierten Größen sind in "Bit pro Sekunde" zu verstehen. Die Normierung auf ganzzahlige Vielfache von 64 bps beruht auf der derzeit in der laufenden Standardisierung angenommenen 64 bps Granularität bei der Signalisierung von Bitraten in IPTC Parametern. Wichtig ist hierbei insbesondere, dass für die Abschätzung des durch den IP Header verursachten Bitratenanteils an den in den IPTC und PIPTC gegebenen Werten Bezug genommen wird auf die "Maximal erlaubte Paket Größe".

Dadurch ist bei Unkenntnis des zu unterstützenden Dienstes die bei den gegebenen Informationen optimale Abschätzung erreicht.

Figur 9 und 10 zeigen die aus Figur 8 definierten Umsetzungstabellen für die Statistische Bandbreiten Transfer Eigenschaft (SBW-TC) und die Bestimmte Bandbreiten Transfer Eigenschaft (DBW-TC). Durch obige Tabellen wird also u.a. eine untere Grenze für die Spitzenbitratenangaben in den LC bzw. PLC auf Basis gegebener IPTC bzw. PIPTC Werte bestimmt, die unter der Annahme der Unkenntnis über den zu unterstützenden Dienst optimiert ist. Diese Umsetzungstabellen finden ihre Anwendung z. B. in einer Inter-Verarbeitungseinheit 2 bei Empfang von Verbindungsaufbau-Anfragen-Nachrichten und Modifizierungs-Nachrichten aus IP-Netzen bzw. -Netzteilen, die gemäß des IP Verbindungs-Kontroll-Protokoll (Q.IPC.CS1) signalisieren.

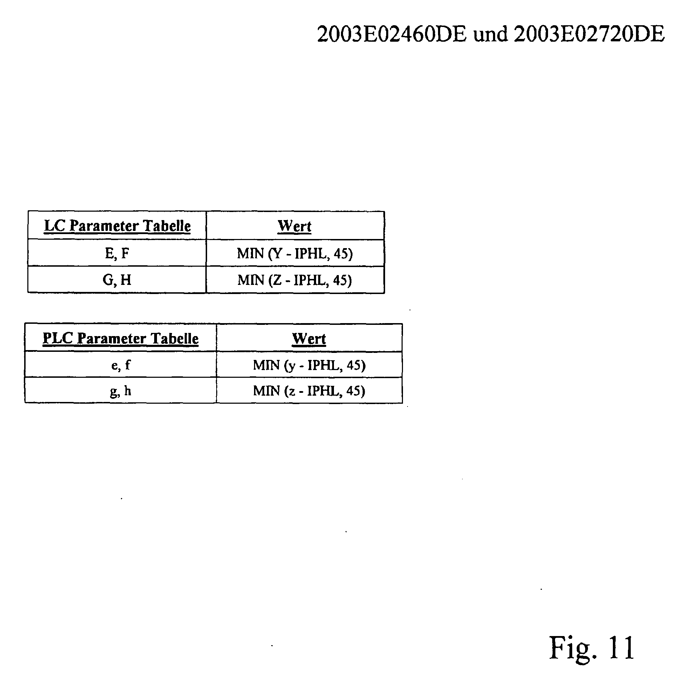

Figur 11 zeigt, wie die Maximale CPS-SDU Größe und die Mittlere CPS-SDU Größe in LC- und PLC-Parametern bestimmt wird. Diese Umsetzungstabellen finden ihre Anwendung z. B. in einer Inter-Verarbeitungseinheit bei Empfang von Verbindungsaufbau-Anfragen-Nachrichten und Modifizierungs-Nachrichten aus IP-Netzen bzw. -Netzteilen, die gemäß des IP Verbindungs-Kontroll-Protokoll (Q.IPC.CS1) signalisieren. Die maximale CPS-SDU Größe und/oder mittlere CPS-SDU Größe werden aus dem Minimum der maximal erlaubten Paketgröße abzüglich der Länge des Headers des IP-Paketes der IP-Transfer-Eigenschaften und/oder Bevorzugten-IP-Transfer-Eigenschaften und die maximal zulässige CPS-SDU Größe bestimmt wird. Die maximal zulässige CPS-SDU wird hier mit 45 octet angegeben.

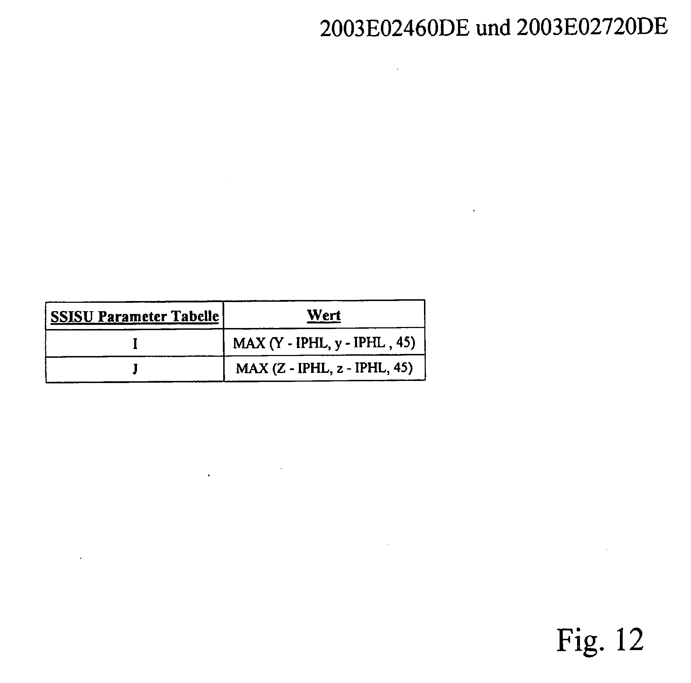

Figur 12 zeigt, wie der SSISU-Parameter aus IPTC bzw. PIPTC-Parametern bestimmt wird. Die PIPTC-Parameter sind nur dann zu berücksichtigen, wenn die Inter-Verarbeitungseinheit eine Modifikation der LC und IPTC unterstützt. Der SSISU Parameter wird aus dem Maximum der maximal erlaubten Paketgröße abzüglich der Länge des Headers des IP-Paketes der IP-Transfer-Eigenschaften, der maximal erlaubten Paketgröße abzüglich der Länge des Headers des IP-Paketes des Bevorzugten-IP-Transfer-Eigenschaften und der maximal zulässigen CPS-SDU Größe bestimmt.

Darüber hinaus soll, falls

$$I = J = 45$$

gilt, kein SSISU Parameter gebildet werden. Diese Bedingung drückt aus, dass auf Basis der vorliegenden Informationen (IPTC, PIPTC) auf AAL2-Seite keine Segmentation gemäß ITU-T Empfehlung I.366.1 erforderlich ist und daher auch kein SSISU Parameter in der Verbindungsaufbau-Anfragen-Nachrichten. Diese Umsetzungstabellen finden ihre Anwendung z. B. in einer Inter-Verarbeitungseinheit bei Empfang von Verbindungsaufbau-Anfragen-Nachrichten und Modifizierungs-Nachrichten aus IP-Netzen bzw. -Netzteilen, die gemäß des IP Verbindungs-Kontroll-Protokoll (Q.IPC.CS1) signalisieren.

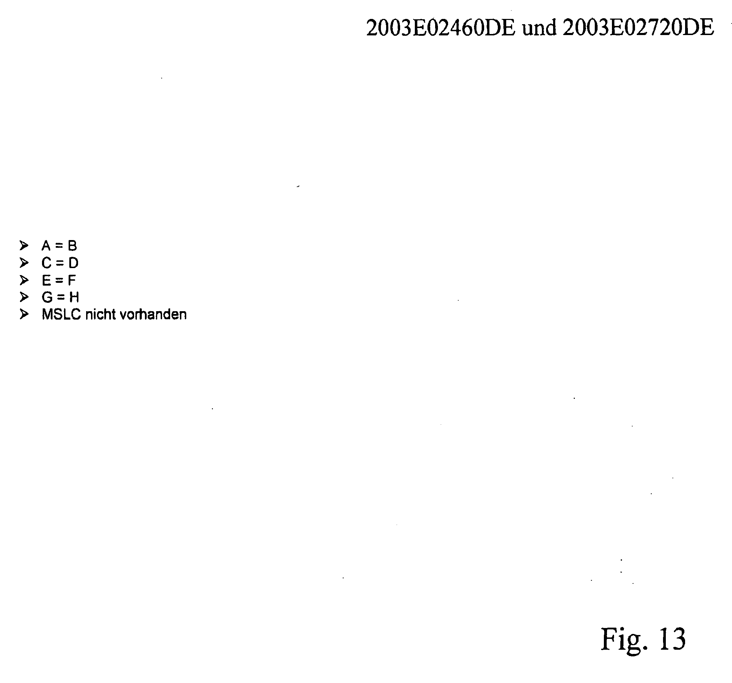

Figur 13 zeigt die Bedingungen für die Bestimmung der IPTC-Klasse. Die "Bestimmte Bandbreiten Transfer Eigenschaft" soll gewählt werden, falls die Bedingungen hinsichtlich der LC Parameter Werte und des MSLC Parameters in der Verbindungsaufbau-Anfragen-Nachricht aus dem AAL2 Netz bzw. Netzteil erfüllt sind. Ist mindestens eine dieser Bedingungen nicht erfüllt, so ist die "Statistische Bandbreiten Transfer Eigenschaft" anzusetzen. Diese Vorschriften findet ihre Anwendung z. B. in einer Inter-Verarbeitungseinheit bei Empfang von Verbindungsaufbau-Anfragen-Nachrichten aus AAL2-Netzen bzw.-Netzteilen, die gemäß ITU-T Empfehlung Q.2630.1 oder Q.2630.2 signalisieren.

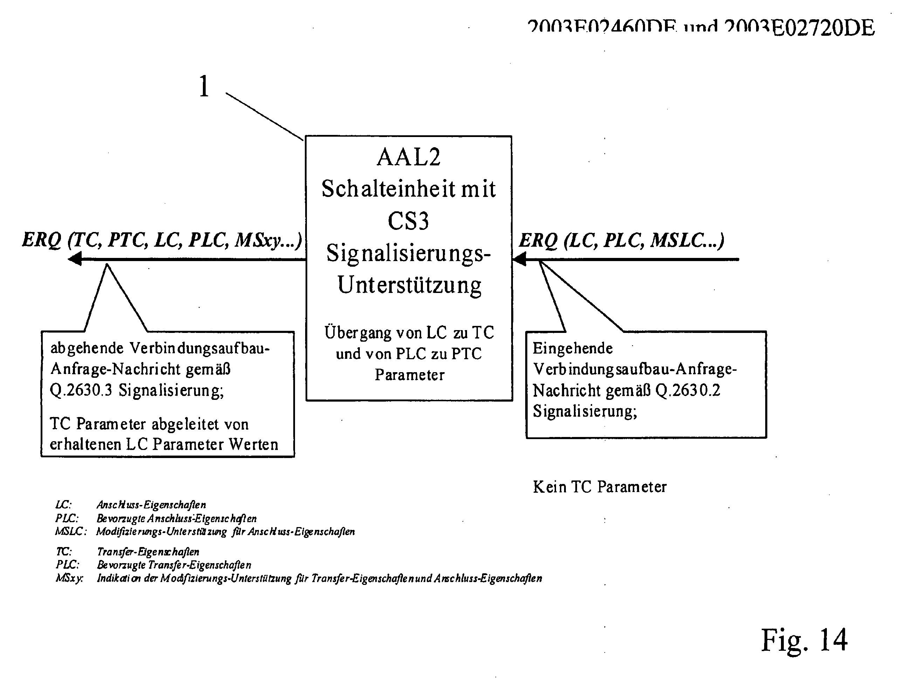

Figur 14 zeigt, wie in einer AAL2-Schalteinheit 1 mit CS3 Signalisierungs-Unterstützung LC- bzw. PLC-Parameter zu TC- bzw. PTC-Parameter übergehen. Bei einer in die AAL2-Schalteinheit 1 eingehende Verbindungsaufbau-Anfrage-Nachricht gemäß Q.2630.2 Signalisierung werden die LC- bzw. PLC-Parameter wird in TC- bzw. PTC-Parameter gemäß den Vorschriften und Bedingungen abgebildet.

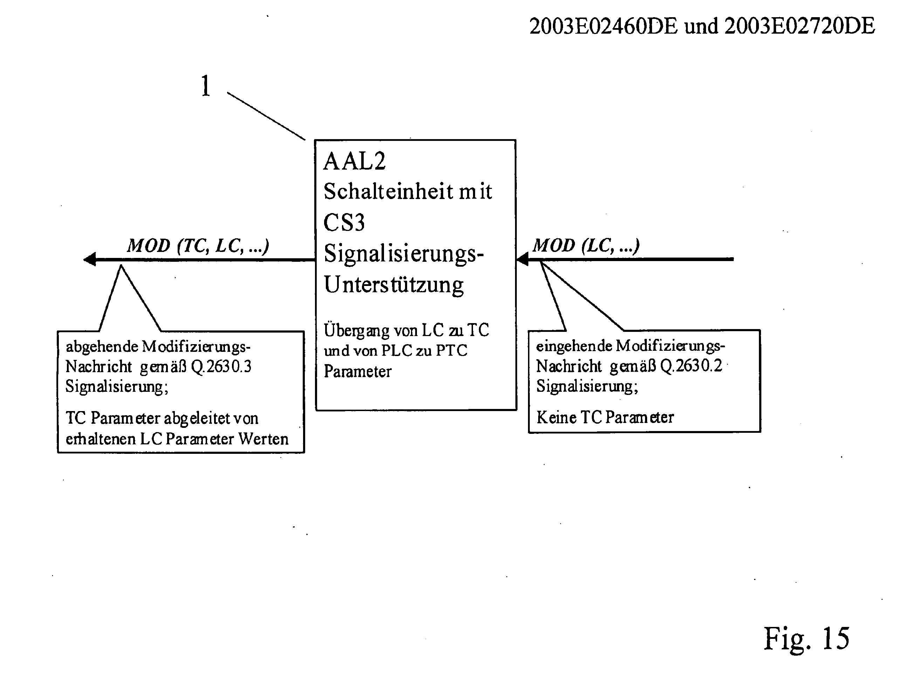

Figur 15 zeigt, wie in einer AAL2-Schalteinheit 1 mit CS3 Signalisierungs-Unterstützung LC- bzw. PLC-Parameter zu TC- bzw. PTC-Parameter bei einer Modifizierungs-Nachricht übergehen.

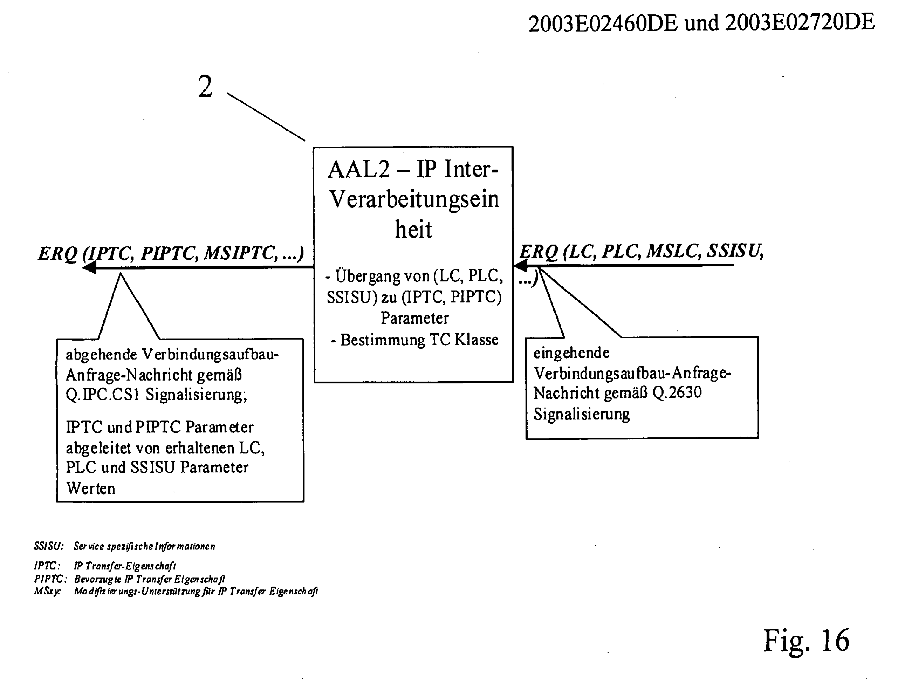

Figur 16 zeigt, wie in einer AAL2-IP Inter-Verarbeitungseinheit 2 LC- bzw. PLC-Parameter bei einer Verbindungsaufbau-Anfragen-Nachricht gemäß Q.2630 Signalisierung zu IPTC- bzw. PIPTC-Parameter bei einer Verbindungsaufbau-Anfragen-Nachricht gemäß Q.IPC.CS1 Signalisierung übergehen.

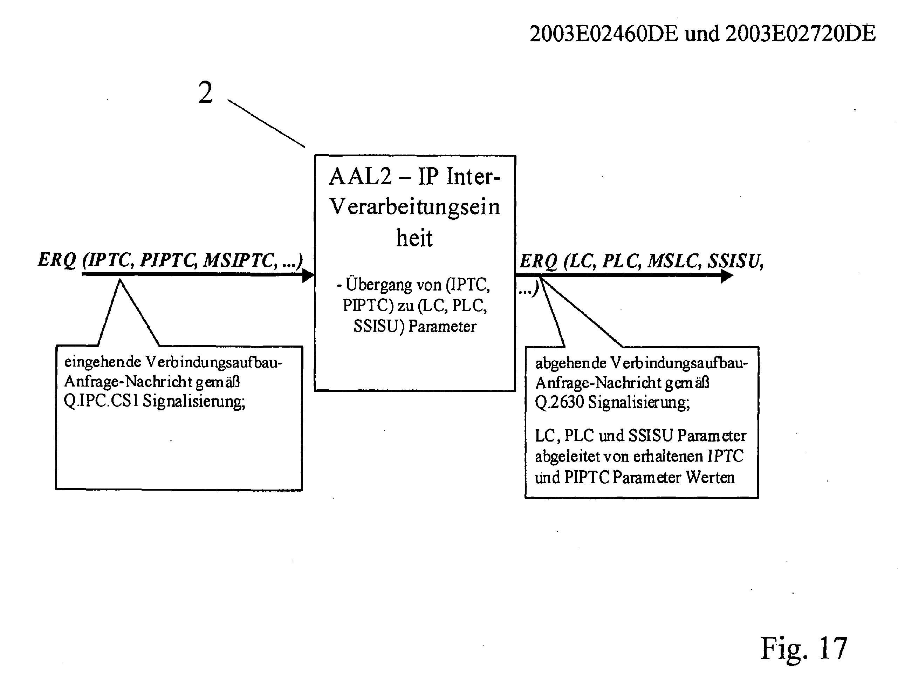

Figur 17 zeigt, wie in einer AAL2-IP Inter-Verarbeitungseinheit 2 IPTC- bzw. PIPTC-Parameter bei einer Verbindungsaufbau-Anfragen-Nachricht gemäß Q.IPC.CS1 Signalisierung zu LC- bzw. PLC-Parameter bei einer Verbindungsaufbau-Anfragen-Nachricht gemäß Q.2630 Signalisierung übergehen.

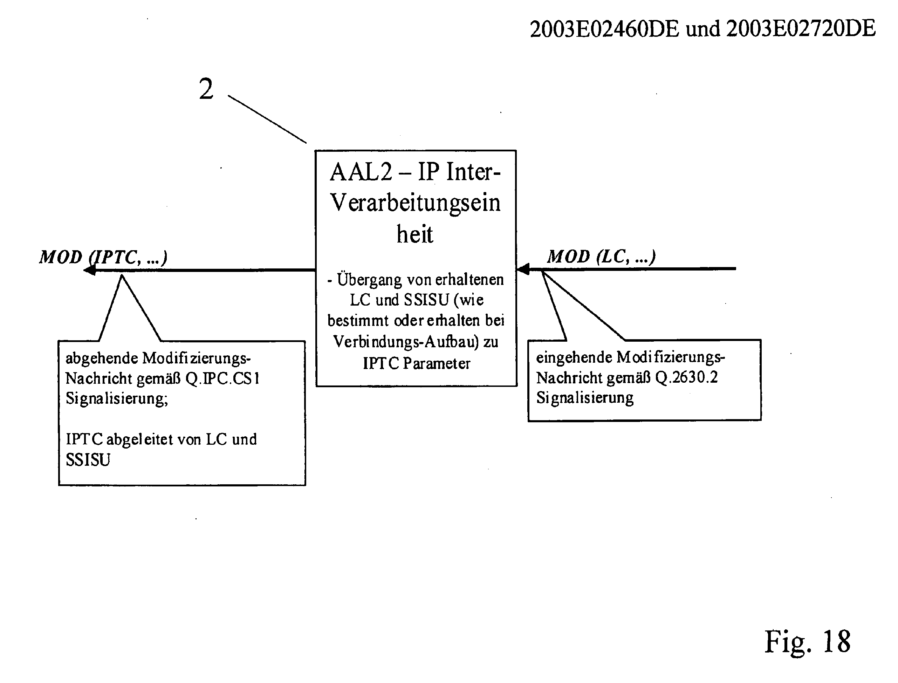

Figur 18 zeigt, wie in einer AAL2-IP Inter-Verarbeitungseinheit 2 LC- bzw. PLC-Parameter bei einer Modifizierungs-Nachricht gemäß Q.2630.2 Signalisierung zu IPTC- bzw. PIPTC-Parameter bei einer Modifizierungs-Nachricht gemäß Q.IPC.CS1 Signalisierung übergehen.

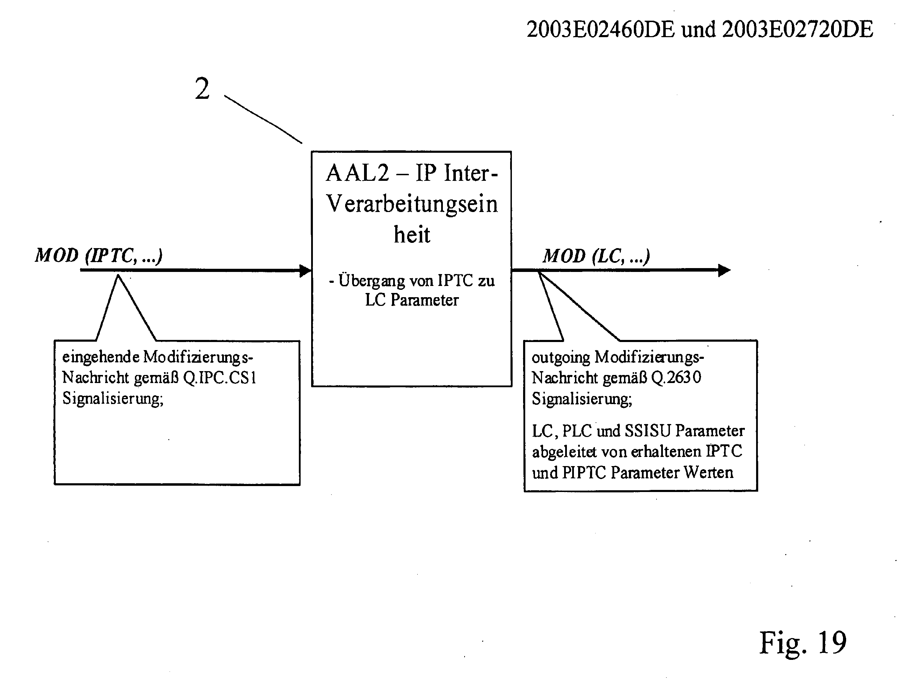

Figur 19 zeigt, wie in einer AAL2-IP Inter-Verarbeitungseinheit 2 IPTC- bzw. PIPTC-Parameter bei einer Modifizierungs-Nachricht gemäß Q.IPC.CS1 Signalisierung zu LC- bzw. PLC-Parameter bei einer Modifizierungs-Nachricht gemäß Q.2630 Signalisierung übergehen.

**Patentansprüche**

1. Verfahren für den Übergang eines AAL2-Signalisierungsprotokolls in mindestens ein weiteres Signalisierungsprotokoll mindestens eines Kommunikationsnetzes
**dadurch gekennzeichnet,**
**dass** mindestens eine Eigenschaft aus für das AAL2-Signalisierungsprotokoll festgelegten Parameter-Werten zur Bandbreitenangabe bestimmt wird und dass mindestens eine bestimmte Eigenschaft für die Abbildung von Anschluss-Eigenschaft Parameter des AAL2-Signalisierungsprotokolls zur Bandbreitenangabe auf Transfer-Eigenschaften Parameter des weiteren Signalisierungsprotokolls zur Bandbreitenangabe verwendet wird.

2. Verfahren nach Anspruch 1,
**dadurch gekennzeichnet,**
**dass** ein Übergang der Parameter-Werte Anschluss-Eigenschaften des AAL2-Signalisierungsprotokoll auf die Parameter-Werte Transfer-Eigenschaften des AAL2-Signalisierungsprotokoll durchgeführt wird.

3. Verfahren nach einem der vorhergehenden Ansprüche,
**dadurch gekennzeichnet,**
**dass** ein Übergang der Parameter-Werte Bevorzugte-Anschluss-Eigenschaften des AAL2-Signalisierungsprotokoll auf die Parameter-Werte Bevorzugte-Transfer-Eigenschaften des AAL2-Signalisierungsprotokoll durchgeführt wird.

4. Verfahren nach einem der vorhergehenden Ansprüche,
**dadurch gekennzeichnet,**
**dass** ein Übergang der Parameter-Werte Anschluss-Eigenschaften des AAL2-Signalisierungsprotokoll auf die Parameter-Werte IP-Transfer-Eigenschaften eines Signalisierungsprotokolls für IP-Verbindungen durchgeführt wird.

5. Verfahren nach einem der vorhergehenden Ansprüche,
**dadurch gekennzeichnet,**
**dass** ein Übergang der Parameter-Werte Bevorzugte-Anschluss-Eigenschaften des AAL2-Signalisierungsprotokoll auf die Parameter-Werte Bevorzugte-IP-Transfer-Eigenschaften eines Signalisierungsprotokolls für IP-Verbindungen durchgeführt wird.

6. Verfahren nach einem der vorhergehenden Ansprüche,
**dadurch gekennzeichnet,**
**dass** der Übergang von Parameter-Werten des AAL2-Signalisierungsprotokolls in ein weiteres Signalisierungsprotokoll aufgrund einer Anruf-Aufbau-Anfrage oder Modifikations-Anfrage durchgeführt wird.

7. Verfahren nach einem der vorhergehenden Ansprüche,
**dadurch gekennzeichnet,**
**dass** als Eigenschaften von Parameter-Werten die Bitraten, die maximal erlaubte Paketgröße, die maximale CPS-SDU Größe, die mittlere CPS-SDU Größe, der SSISU Parameter oder die IP-Transfer-Eigenschaften Klasse bestimmt wird.

8. Verfahren nach einem der vorhergehenden Ansprüche,
**dadurch gekennzeichnet,**
**dass** für die Bitratenbestimmung bei dem Übergang der Parameter-Werte Anschluss-Eigenschaften des AAL2-Signalisierungsprotokoll auf die Parameter-Werte Transfer-Eigenschaften des AAL2-Signalisierungsprotokoll die Anzahl der Daten-Pakete der Peak-Rate pro Zeiteinheit bezogen auf die mittlere CPS-SDU Größe ermittelt und zusammen mit der Länge eines Paket Header die Bitrate bestimmt wird.

9. Verfahren nach einem der vorhergehenden Ansprüche,
**dadurch gekennzeichnet,**
**dass** für die Bitratenbestimmung bei dem Übergang der Parameter-Werte Anschluss-Eigenschaften des AAL2-Signalisierungsprotokoll auf die Parameter-Werte IP-Transfer-Eigenschaften eines Signalisierungsprotokoll für IP-Verbindungen aus der Anzahl der Daten-Pakete pro Zeiteinheit der Peak-Rate bei maximaler Paket-Größe die minimale Header Bitrate auf der IP-Seite bestimmt und zusammen mit der Peak-Byte-Rate die Bitrate bestimmt wird.

10. Verfahren nach einem der vorhergehenden Ansprüche,
**dadurch gekennzeichnet,**
**dass** die maximal erlaubte Paketgröße aus der maximalen CPS-SDU Größe, der maximalen Länge des SSSAR-SDU und die Länge des Headers des IP-Pakets bestimmt wird.

11. Verfahren nach einem der vorhergehenden Ansprüche,
**dadurch gekennzeichnet,**
**dass** bei der Bestimmung der Eigenschaften eine Normierung auf ein ganzzahliges Vielfaches von 64 Bit pro Sekunde durchgeführt wird.

12. Verfahren nach einem der vorhergehenden Ansprüche,
**dadurch gekennzeichnet,**
**dass** die maximale CPS-SDU Größe und/oder mittlere CPS-SDU Größe aus dem Minimum der maximal erlaubten Paketgröße abzüglich der Länge des Headers des IP-Paketes der IP-Transfer-Eigenschaften oder Bevorzugten-IP-Transfer-Eigenschaften und der maximal zulässigen CPS-SDU Größe bestimmt wird.

13. Verfahren nach einem der vorhergehenden Ansprüche,
**dadurch gekennzeichnet,**
**dass** der SSISU Parameter aus dem Maximum der maximal erlaubten Paketgröße abzüglich der Länge des Headers des IP-Paketes der IP-Transfer-Eigenschaften, der maximal erlaubten Paketgröße abzüglich der Länge des Headers des IP-Paketes des Bevorzugten-IP-Transfer-Eigenschaften und der maximal zulässigen CPS-SDU Größe bestimmt wird.

14. Verfahren nach Anspruch 13,
**dadurch gekennzeichnet,**
**dass** die Bestimmte-Bandbreiten-Transfer-Befähigung aufgrund von vorher definierten Bedingungen hinsichtlich der Anschluss-Eigenschaften oder MS-Anschluss-Eigenschaften einer Anruf-Aufbau-Anfrage aus einem AAL2-Netz gewählt und dass bei Nichterfüllung mindestens einer dieser Bedingungen die Statistische-Bandbreiten-Transfer-Befähigung als IP-Transfer-Eigenschaften-Klasse benutzt wird.

15. Verfahren nach Anspruch 14,
**dadurch gekennzeichnet,**
**dass** die IP-Transfer-Eigenschaften-Klasse bei Empfang einer Anruf-Aufbau-Anfrage von einer Inter-Verarbeitungseinheit bestimmt wird.

16. Verfahren nach einem der vorhergehenden Ansprüche,
**dadurch gekennzeichnet,**
**dass** für die Bestimmung der Länge des Headers des IP-Paketes der IP-Paket-Header, der UDP-Header und für Verbindungen, die RTP benutzen, der RTP-Header benutzt werden.

17. Verfahren nach einem der vorhergehenden Ansprüche,
**dadurch gekennzeichnet,**
**dass** die Bestimmung der Eigenschaften bei dem Übergang des AAL2-Signalisierungsprotokoll in ein Signalisierungsprotokoll für IP-Verbindungen in einer Inter-Verarbeitungseinheit durchgeführt wird.

18. Verfahren nach einem der vorhergehenden Ansprüche,
**dadurch gekennzeichnet,**
**dass** die Bestimmung der Eigenschaften bei dem Übergang des AAL2-Signalisierungsprotokoll in ein weiteres AAL2-Signalisierungsprotokoll in einer AAL2-Schalteinrichtung durchgeführt wird.

19. Vorrichtung für den Übergang eines AAL2-Signalisierungsprotokolls in mindestens ein weiteres Signalisierungsprotokoll mindestens eines Kommunikationsnetzes

- mit einer Empfangseinheit zum Empfangen von Parameter-Werten eines AAL2-Signalisierungsprotokolls,
- mit einer Verarbeitungseinheit für die Bestimmung mindestens einer Eigenschaft aus für das AAL2-Signalisierungsprotokoll festgelegten Parameter-Werten zur Bandbreitenangabe und für die Abbildung von Anschluss-Eigenschaft Parametern des AAL2-Signalisierungsprotokolls zur Bandbreitenangabe auf Transfer-Eigenschaften Parameter des weiteren Signalisierungsprotokolls zur Bandbreitenangabe und
- mit einer Sendeeinheit zum Senden der abgebildeten Parameter-Werte des weiteren Signalisierungsprotokolls.

20. Vorrichtung nach Anspruch 19,
**dadurch gekennzeichnet,**
**dass** als Vorrichtung eine AAL2-Schalteinheit vorgesehen ist.

21. Vorrichtung nach einem der vorhergehenden Ansprüche,
**dadurch gekennzeichnet,**
**dass** als Vorrichtung eine Inter-Verarbeitungseinheit vorgesehen ist.

**Claims**

1. Method for the transition from an AAL2 signalling protocol to at least one further signalling protocol of at least one communication network,
**characterised in that**
at least one characteristic is determined from parameter values for indicating bandwidth defined for the AAL2 signalling protocol and
at least one determined characteristic is used to map connection characteristic parameters of the AAL2 signalling protocol for indicating bandwidth onto transfer characteristic parameters of the further signalling protocol for indicating bandwidth.

2. Method according to claim 1,
**characterised in that**
a transition is made from the parameter values connection characteristics of the AAL2 signalling protocol to the parameter values transfer characteristics of the AAL2 signalling protocol.

3. Method according to one of the preceding claims,
**characterised in that**
a transition is made from the parameter values preferred connection characteristics of the AAL2 signalling protocol to the parameter values preferred transfer characteristics of the AAL2 signalling protocol.

4. Method according to one of the preceding claims,
**characterised in that**
a transition is made from the parameter values connection characteristics of the AAL2 signalling protocol to the parameter values IP transfer characteristics of a signalling protocol for IP connections.

5. Method according to one of the preceding claims,
**characterised in that**
a transition is made from the parameter values preferred connection characteristics of the AAL2 signalling protocol to the parameter values preferred IP transfer characteristics of a signalling protocol for IP connections.

6. Method according to one of the preceding claims,
**characterised in that**
the transition is made from parameter values of the AAL2. signalling protocol to a further signalling protocol based on a call setup request or modification request.

7. Method according to one of the preceding claims,
**characterised in that**
the bit rates, maximum permitted packet size, maximum CPS-SDU size, mean CPS-SDU size, SSISU parameter or IP transfer characteristics class is determined as characteristics of parameter values.

8. Method according to one of the preceding claims,
**characterised in that**
for bit rate determination during the transition from the parameter values connection characteristics of the AAL2 signalling protocol to the parameter values transfer characteristics of the AAL2 signalling protocol, the number of peak rate data packets per unit of time is determined in relation to the mean CPS-SDU size and the bit rate is determined together with the length of a packet header.

9. Method according to one of the preceding claims,
**characterised in that**
for bit rate determination during the transition from the parameter values connection characteristics of the AAL2 signalling protocol to the parameter values IP transfer characteristics of a signalling protocol for IP connections, the minimum header bit rate on the IP side is determined from the number of data packets per unit of time of peak rate at maximum packet size and the bit rate is determined together with the peak byte rate.

10. Method according to one of the preceding claims,
**characterised in that**
the maximum permitted packet size is determined from the maximum CPS-SDU size, the maximum length of the SSSAR-SDU and the length of the header of the IP packet.

**11.** Method according to one of the preceding claims, **characterised in that**
when determining the characteristics, scaling to a whole-number multiple of 64 bits per second is carried out.

**12.** Method according to one of the preceding claims, **characterised in that**
the maximum CPS-SDU size and/or mean CPS-SDU size is/are determined from the minimum of the maximum permitted packet size minus the length of the header of the IP packet of the IP transfer characteristics or preferred IP transfer characteristics and the maximum permissible CPS-SDU size.

**13.** Method according to one of the preceding claims, **characterised in that**
the SSISU parameter is determined from the maximum of the maximum permitted packet size minus the length of the header of the IP packet of the IP transfer characteristics, the maximum permitted packet size minus the length of the header of the IP packet of the preferred IP transfer characteristics and the maximum permissible CPS-SDU size.

**14.** Method according to claim 13, **characterised in that**
the determined bandwidth transfer capability is selected based on previously defined conditions relating to the connection characteristics or MS connection characteristics of a call setup request from an AAL2 network and, if there is failure to comply with at least one of said conditions, the statistical bandwidth transfer capability is used as the IP transfer characteristics class.

**15.** Method according to claim 14, **characterised in that**
the IP transfer characteristics class is determined on receipt of a call setup request from an inter-processing unit.

**16.** Method according to one of the preceding claims, **characterised in that**
the IP packet header, UDP header and, for connections using RTP, the RTP header are used to determine the length of the header of the IP packet.

**17.** Method according to one of the preceding claims, **characterised in that**
the characteristics are determined in an inter-processing unit during the transition from the AAL2 signalling protocol to a signalling protocol for IP connections.

**18.** Method according to one of the preceding claims, **characterised in that**
the characteristics are determined in an AAL2 switching unit during the transition from the AAL2 signalling protocol to a further AAL2 signalling protocol.

**19.** Device for the transition from an AAL2 signalling protocol to at least one further signalling protocol of at least one communication network

- with a receive unit to receive parameter values of an AAL2 signalling protocol,
- with a processing unit to determine at least one characteristic from parameter values for indicating bandwidth defined for the AAL2 signalling protocol and to map connection characteristic parameters of the AAL2 signalling protocol for indicating bandwidth onto transfer characteristic parameters of the further signalling protocol for indicating bandwidth and
- with a transmit unit to transmit the mapped parameter values of the further signalling protocol.

**20.** Device according to claim 19, **characterised in that**
an AAL2 switching unit is provided as the device.

**21.** Device according to one of the preceding claims, **characterised in that**
an inter-processing unit is provided as the device.

**Revendications**

**1.** Procédé de transfert d'un protocole de signalisation AAL2 vers au moins un autre protocole de signalisation d'au moins un réseau de communication, **caractérisé en ce que** l'au moins une propriété est définie à partir de valeurs de paramètres spécifiées pour le protocole de signalisation AAL2 pour l'indication de largeur de bande et **en ce que** au moins une propriété définie est utilisée pour reproduire le paramètre de propriété de connexion du protocole de signalisation AAL2 pour l'indication de largeur de bande sur des paramètres de propriétés de transfert de l'autre protocole de signalisation pour l'indication de largeur de bande.

**2.** Procédé selon la revendication 1, **caractérisé en ce qu'**un transfert des valeurs de paramètres de propriétés de connexion du protocole de signalisation AAL2 est effectué vers les valeurs de paramètres de propriétés de transfert du protocole de signalisation AAL2.

**3.** Procédé selon l'une des revendications précédentes, **caractérisé en ce qu'**un transfert des valeurs de paramètres de propriétés de connexion préférées du protocole de signalisation AAL2 est effectué vers les valeurs de paramètres de propriétés de transfert préférées du protocole de signalisation AAL2.

4. Procédé selon l'une des revendications précédentes, **caractérisé en ce qu'**un transfert des valeurs de paramètres de propriétés de raccordement du protocole de signalisation AAL2 est effectué vers les valeurs de paramètres de propriétés de transfert IP d'un protocole de signalisation pour des liaisons IP.

5. Procédé selon l'une des revendications précédentes, **caractérisé en ce qu'**un transfert des valeurs de paramètres de propriétés de connexion préférées du protocole de signalisation AAL2 est effectué vers les valeurs de paramètres de propriétés de transfert IP préférées d'un protocole de signalisation pour des liaisons IP.

6. Procédé selon l'une des revendications précédentes, **caractérisé en ce que** le transfert de valeurs de paramètres du protocole de signalisation AAL2 est effectué vers un autre protocole de signalisation en se fondant sur une requête d'établissement d'appel ou une requête de modification.

7. Procédé selon l'une des revendications précédentes, **caractérisé en ce que** l'on détermine, comme propriétés de valeurs de paramètres les débits binaires, la dimension de paquet maximale autorisée, la dimension CPS-SDU maximale, la dimension CPS-SDU moyenne, le paramètre SSISU ou la classe propriétés de transfert IP.

8. Procédé selon l'une des revendications précédentes, **caractérisé en ce que**, pour déterminer le débit binaire lors du transfert des valeurs de paramètres de propriétés de connexion du protocole de signalisation AAL2 vers les valeurs de paramètres de propriétés de transfert du protocole de signalisation AAL2, on détermine le nombre de paquets de données du débit maximum par unité de temps rapporté à la taille CPS-SDU moyenne et on définit le débit binaire conjointement avec la longueur d'un en-tête de paquet.

9. Procédé selon l'une des revendications précédentes, **caractérisé en ce que**, pour déterminer le débit binaire lors du transfert des valeurs de paramètres de propriétés de connexion du protocole de signalisation AAL2 vers les valeurs de paramètres de propriétés de transfert IP d'un protocole de signalisation pour des liaisons IP à partir du nombre de paquets de données par unité de temps du débit maximum pour une dimension de paquet maximale, on définit le débit binaire d'en-tête minimum du côté IP et on définit le débit binaire conjointement avec le débit d'octets maximum.

10. Procédé selon l'une des revendications précédentes, **caractérisé en ce que** la dimension de paquet maximale permise est définie à partir de la dimension CPS-SDU maximale, de la longueur maximale du SSAR-SDU et de la longueur de l'en-tête du paquet IP.

11. Procédé selon l'une des revendications précédentes, **caractérisé en ce que**, lors de la définition des propriétés, on norme sur un multiple entier de 64 bits par seconde.

12. Procédé selon l'une des revendications précédentes, **caractérisé en ce que** la dimension CPS-SDU maximale et/ou la dimension CPS-SDU moyenne est définie à partir du minimum de la dimension de paquet maximale permise moins la longueur de l'en-tête du paquet IP des propriétés de transfert IP ou des propriétés de transfert IP préférées et de la dimension CPS-SDU maximale permise.

13. Procédé selon l'une des revendications précédentes, **caractérisé en ce que** le paramètre SSISU est défini à partir du maximum de la dimension de paquet maximale permise moins la longueur de l'en-tête du paquet IP des propriétés de transfert IP, de la dimension de paquet maximale permise moins la longueur de l'en-tête du paquet IP des propriétés de transfert IP préférées et de la dimension CPS-SDU maximale permise.

14. Procédé selon la revendication 13, **caractérisé en ce que** les qualités de transfert de largeur de bande définies sont choisies à partir d'un réseau AAL2 en raison des conditions définies précédemment quant aux propriétés de connexion ou aux propriétés de connexion MS d'une requête d'établissement d'appel et **en ce que**, lorsque au moins une de ces conditions n'est pas remplie, les qualités de transfert de largeur de bande statistique sont utilisées comme un classe de propriétés de transfert IP.

15. Procédé selon la revendication 14, **caractérisé en ce que** la classe de propriétés de transfert IP est définie à la réception d'une requête d'établissement d'appel provenant d'une unité de traitement intermédiaire.

16. Procédé selon l'une des revendications précédentes, **caractérisé en ce que**, pour déterminer la longueur de l'en-tête du paquet IP, on utilise l'en-tête de paquet IP, l'en-tête UDP et, pour des liaisons qui utilisent RTP, l'en-tête RTP.

17. Procédé selon l'une des revendications précédentes, **caractérisé en ce que** la détermination des propriétés lors du transfert du protocole de signalisation AAL2 vers un protocole de signalisation pour des liaisons IP est effectuée dans une unité de traitement intermédiaire.

**18.** Procédé selon l'une des revendications précédentes, **caractérisé en ce que** la détermination des propriétés lors du transfert du protocole de signalisation AAL2 vers un autre protocole de signalisation AAL2 est effectuée dans un dispositif de commutation AAL2.

**19.** Dispositif de transfert d'un protocole de signalisation AAL2 vers au moins un autre protocole de signalisation d'au moins un réseau de communication, ledit dispositif comportant

> - une unité de réception permettant de recevoir des valeurs de paramètres d'un protocole de signalisation AAL2,
> - une unité de traitement permettant de déterminer au moins une propriété à partir de valeurs de paramètres spécifiées pour le protocole de signalisation AAL2 pour l'indication de largeur de bande et de reproduire des paramètres de propriété de connexion du protocole de signalisation AAL2 pour l'indication de largeur de bande sur des paramètres de propriétés de transfert de l'autre protocole de signalisation pour l'indication de largeur de bande et
> - une unité d'émission permettant d'émettre des valeurs de paramètres reproduites de l'autre protocole de signalisation.

**20.** Dispositif selon la revendication 19, **caractérisé en ce que** le dispositif prévu est une unité de commutation AAL2.

**21.** Dispositif selon l'une des revendications précédentes, **caractérisé en ce que** le dispositif prévu est une unité de traitement intermédiaire.

| LC Parameter Tabelle |
|---|
| A = Maximale CPS-SDU Bitrate in Vorwärtsrichtung |
| B = Mittlere CPS-SDU Bitrate in the Vorwärtsrichtung |
| C = Maximale CPS-SDU Bitrate in Rückwärtsrichtung |
| D = Mittlere CPS-SDU Bitrate in Rückwärtsrichtung |
| E = Maximale CPS-SDU Größe in Vorwärtsrichtung |
| F = Mittlere CPS-SDU Größe in Vorwärtsrichtung |
| G = Maximale CPS-SDU Größe in Rückwärtsrichtung |
| H = Mittlere CPS-SDU Größe in Rückwärtsrichtung |

| TC Parameter Untertabelle |
|---|
| U = Peak CPS Bitrate in Vorwärtsrichtung |
| V = Dauerhafte CPS Bitrate in Vorwärtsrichtung |
| W = Peak CPS Bitrate in the Rückwärtsrichtung |
| X = Dauerhafte CPS Bitrate in Rückwärtsrichtung |
| Y = Maximal erlaubte CPS Größe in Vorwärtsrichtung |
| Z = Maximal erlaubte CPS Größe in Rückwärtsrichtung |

| SSISU Parameter Tabelle |
|---|
| I = *Maximale Länge des SSSAR-SDU in Vorwärtsrichtung* |
| J = *Maximale Länge des SSSAR-SDU in Rückwärtsrichtung* |

| IPTC Parameter Tabelle |
|---|
| U = *Peak Bitrate in Vorwärtsrichtung* |
| V = *Dauerhafte Bitrate in Vorwärtsrichtung* |
| W = *Peak Bitrate in Rückwärtsrichtung* |
| X = *Dauerhafte Bitrate in Rückwärtsrichtung* |
| Y = *Maximal erlaubte Paketgröße in Vorwärtsrichtung* |
| Z = *Maximal erlaubte Paketgröße in Rückwärtsrichtung* |

EP 1 455 496 B1

Fig. 1

| PLC Parameter Tabelle |
|---|
| a = *Maximale CPS-SDU Bitrate in Vorwärtsrichtung* |
| b = *Mittlere CPS-SDU Bitrate in Vorwärtsrichtung* |
| c = *Maximale CPS-SDU Bitrate in Rückwärtsrichtung* |
| d = *Mittlere CPS-SDU Bitrate in Rückwärtsrichtung* |
| e = *Maximale CPS-SDU Größe in Vorwärtsrichtung* |
| f = *Mittlere CPS-SDU Größe in Vorwärtsrichtung* |
| g = *Maximale CPS-SDU Größe in Rückwärtsrichtung* |
| h = *Mittlere CPS-SDU Größe in Rückwärtsrichtung* |

| PIPTC Parameter Tabelle |
|---|
| u = *Peak Bitrate in Vorwärtsrichtung* |
| v = *Dauerhafte Bitrate in Vorwärtsrichtung* |
| w = *Peak Bitrate in Rückwärtsrichtung* |
| x = *Dauerhafte Bitrate in Rückwärtsrichtung* |
| y = *Maximal erlaubte Paketgröße in Vorwärtsrichtung* |
| z = *Maximal erlaubte Paketgröße in Rückwärtsrichtung* |

| PTC Parameter Untertabelle |
|---|
| u = Peak CPS Bitrate in Vorwärtsrichtung |
| v = Dauerhafte CPS Bitrate in Vorwärtsrichtung |
| w = Peak CPS Bitrate in Rückwärtsrichtung |
| x = Dauerhafte CPS Bitrate in Rückwärtsrichtung |
| y = Maximal erlaubte CPS Größe in Vorwärtsrichtung |
| z = Maximal erlaubte CPS Größe in Rückwärtsrichtung |

Fig. 2

| Definition | | Bedeutung |
|---|---|---|
| HBA := [ 3*A / 64*F] * 64 | , falls F > 0 | Abschätzung der durch den AAL2 CPS Paket Header verursachten Bitrate für LC in Vorwärtsrichtung für die Peak Bitrate |
| HBA := 0 | , falls F = 0 | |
| HBa := [ 3*a / 64*f] * 64 | , falls f > 0 | Abschätzung der durch den AAL2 CPS Paket Header verursachten Bitrate für PLC in Vorwärtsrichtung für die Peak Bitrate |
| HBa := 0 | , falls f = 0 | |
| HBB := [3*B / 64*F] * 64 | , falls F > 0 | Abschätzung der durch den AAL2 CPS Paket Header verursachten Bitrate für LC in Vorwärtsrichtung für die Dauerhafte Bitrate |
| HBB := 0 | , falls F = 0 | |
| HBb := [ 3*b / 64*f] * 64 | , falls f > 0 | Abschätzung der durch den AAL2 CPS Paket Header verursachten Bitrate für PLC in Vorwärtsrichtung für die Dauerhafte Bitrate |
| HBb := 0 | , falls f = 0 | |
| HBC := [3*C / 64*H] * 64 | , falls H > 0 | Abschätzung der durch den AAL2 CPS Paket Header verursachten Bitrate für LC in Rückwärtsrichtung für die Peak Bitrate |
| HBC := 0 | , falls H = 0 | |
| HBc := [3*c / 64*h] * 64 | , falls h > 0 | Abschätzung der durch den AAL2 CPS Paket Header verursachten Bitrate für PLC in Rückwärtsrichtung für die Peak Bitrate |
| HBc := 0 | , falls h = 0 | |
| HBD := [3*D / 64*H] * 64 | , falls H > 0 | Abschätzung der durch den AAL2 CPS Paket Header verursachten Bitrate für LC in Rückwärtsrichtung für die Dauerhafte Bitrate |
| HBD := 0 | , falls H = 0 | |
| HBd := [3*d / 64*h] * 64 | , falls h > 0 | Abschätzung der durch den AAL2 CPS Paket Header verursachten Bitrate für PLC in Rückwärtsrichtung für die Dauerhafte Bitrate |
| HBd := 0 | , falls h = 0 | |

Fig. 3

EP 1 455 496 B1

| TC Parameter Untertabelle | Wert |
|---|---|
| U | A + HBA |
| V | B + HBB |
| W | C + HBC |
| X | D + HBD |

| IPTC Parameter Tabelle | Wert |
|---|---|
| U | A + HBA |
| V | B + HBB |
| W | C + HBC |
| X | D + HBD |

| PTC Parameter Untertabelle | Wert |
|---|---|
| u | a + HBa |
| v | b + HBb |
| w | c + HBc |
| x | d + HBd |

| PIPTC Parameter Tabelle | Wert |
|---|---|
| u | a + HBa |
| v | b + HBb |
| w | c + HBc |
| x | d + HBd |

EP 1 455 496 B1

Fig. 4

➢ A = B
➢ a = b
➢ C = D
➢ c = d
➢ E = F
➢ e = f
➢ G = H
➢ g = h
➢ MSLC nicht vorhanden

Fig. 5

EP 1 455 496 B1

| Definition | | Bedeutung |
|---|---|---|
| HBA := [IPHL*A / 64*F] * 64<br>HBA := 0 | , falls F > 0<br>, falls F = 0 | Abschätzung der durch den IP Header verursachten Bitratenanteils bei gegebenen LC in Vorwärtsrichtung für die Peak Bitrate |
| HBa := [IPHL*a / 64*f] * 64<br>HBa := 0 | , falls f > 0<br>, falls f = 0 | Abschätzung der durch den IP Header verursachten Bitratenanteils bei gegebenen PLC in Vorwärtsrichtung für die Peak Bitrate |
| HBB := [IPHL*B / 64*F] * 64<br>HBB := 0 | , falls F > 0<br>, falls F = 0 | Abschätzung der durch den IP Header verursachten Bitratenanteils bei gegebenen LC in Vorwärtsrichtung für die Dauerhafte Bitrate |
| HBb := [IPHL*b / 64*f] * 64<br>HBb := 0 | , falls f > 0<br>, falls f = 0 | Abschätzung der durch den IP Header verursachten Bitratenanteils bei gegebenen PLC in Vorwärtsrichtung für die Sustainable Byte Rate |
| HBC := [IPHL*C / 64*H] * 64<br>HBC := 0 | , falls H > 0<br>, falls H = 0 | Abschätzung der durch den IP Header verursachten Bitratenanteils bei gegebenen LC in Rückwärtsrichtung für die Peak Bitrate |
| HBc := [IPHL*c / 64*h] * 64<br>HBc := 0 | , falls h > 0<br>, falls h = 0 | Abschätzung der durch den IP Header verursachten Bitratenanteils bei gegebenen PIPTC in Rückwärtsrichtung für die Peak Bitrate |
| HBD := [IPHL*D / 64*H] * 64<br>HBD := 0 | , falls H > 0<br>, falls H = 0 | Abschätzung der durch den IP Header verursachten Bitratenanteils bei gegebenen LC in Rückwärtsrichtung für die Dauerhafte Bitrate |
| HBd := [IPHL*d / 64*h] * 64<br>HBd := 0 | , falls h > 0<br>, falls h = 0 | Abschätzung der durch den IP Header verursachten Bitratenanteils bei gegebenen PLC in Rückwärtsrichtung für die Dauerhafte Bitrate |

Fig. 6

| IPTC Parameter Tabelle | Wert |
|:---:|:---:|
| Y | IPHL + MAX (E, I) |
| Z | IPHL + MAX (G, J) |

| PIPTC Parameter Tabelle | Wert |
|:---:|:---:|
| y | IPHL + MAX (e, I) |
| z | IPHL + MAX (g, J) |

EP 1 455 496 B1

Fig. 7

| Definition | | Bedeutung |
|---|---|---|
| HBU := [IPHL*U / 64*Y] * 64 | , falls Y > 0 | Abschätzung der durch den IP Header verursachten Bitratenanteils bei gegebenen IPTC in Vorwärtsrichtung für die Peak CPS-SDU Bit Rate |
| HBU := 0 | , falls Y = 0 | |
| HBu := [IPHL*u / 64*y] * 64 | , falls y > 0 | Abschätzung der durch den IP Header verursachten Bitratenanteils bei gegebenen PIPTC in Vorwärtsrichtung für die Peak CPS-SDU Bitrate |
| HBu := 0 | , falls y = 0 | |
| HBV := [IPHL*V / 64*Y] * 64 | , falls Y > 0 | Abschätzung der durch den IP Header verursachten Bitratenanteils bei gegebenen IPTC in Vorwärtsrichtung für die Mittlere CPS-SDU Bitrate |
| HBV := 0 | , falls Y = 0 | |
| HBv := (IPHL*v / 64*y] * 64 | , falls y > 0 | Abschätzung der durch den IP Header verursachten Bitratenanteils bei gegebenen PIPTC in Vorwärtsrichtung für die Mittlere CPS-SDU Bitrate |
| HBv := 0 | , falls y = 0 | |
| HBW := [IPHL*W / 64*Z] * 64 | , falls Z > 0 | Abschätzung der durch den IP Header verursachten Bitratenanteils bei gegebenen IPTC in Rückwärtsrichtung für die Peak CPS-SDU Bitrate |
| HBW := 0 | , falls Z = 0 | |
| HBw := [IPHL*w / 64*z] * 64 | , falls z > 0 | Abschätzung der durch den IP Header verursachten Bitratenanteils bei gegebenen PIPTC in Rückwärtsrichtung für die Peak CPS-SDU Bitrate |
| HBw := 0 | , falls z = 0 | |
| HBX := [IPHL*X / 64*Z] * 64 | , falls Z > 0 | Abschätzung der durch den IP Header verursachten Bitratenanteils bei gegebenen IPTC in Rückwärtsrichtung für die Mittlere CPS-SDU Bitrate |
| HBX := 0 | , falls Z = 0 | |
| HBx := [IPHL*x / 64*z] * 64 | , falls z > 0 | Abschätzung der durch den IP Header verursachten Bitratenanteils bei gegebenen PIPTC in Rückwärtsrichtung für die Mittlere CPS-SDU Bitrate |
| HBx := 0 | , falls z = 0 | |

Fig. 8

| LC Parameter Tabelle | Wert |
|:---:|:---:|
| A | U - HBU |
| B | V - HBV |
| C | W - HBW |
| D | X - HBX |

| PIPTC Parameter Tabelle | Wert |
|:---:|:---:|
| a | u - HBu |
| b | v - HBv |
| c | w - HBw |
| d | x - HBx |

Fig. 9

EP 1 455 496 B1

| LC Parameter Tabelle | Wert |
|:---:|:---:|
| A | U - HBU |
| B | U - HBU |
| C | W - HBW |
| D | W - HBW |

| PIPTC Parameter Tabelle | Wert |
|:---:|:---:|
| a | u - HBu |
| b | u - HBu |
| c | w - HBw |
| d | w - HBw |

Fig. 10

| LC Parameter Tabelle | Wert |
|:---:|:---:|
| E, F | MIN (Y - IPHL, 45) |
| G, H | MIN (Z - IPHL, 45) |

| PLC Parameter Tabelle | Wert |
|:---:|:---:|
| e, f | MIN (y - IPHL, 45) |
| g, h | MIN (z - IPHL, 45) |

Fig. 11

EP 1 455 496 B1

| SSISU Parameter Tabelle | Wert |
|---|---|
| I | MAX (Y - IPHL, y - IPHL , 45) |
| J | MAX (Z - IPHL, z - IPHL, 45) |

Fig. 12

- A = B
- C = D
- E = F
- G = H
- MSLC nicht vorhanden

EP 1 455 496 B1

Fig. 13

1

AAL2
Schalteinheit mit
CS3
Signalisierungs-
Unterstützung

Übergang von LC zu TC
und von PLC zu PTC
Parameter

*ERQ (TC, PTC, LC, PLC, MSxy...)*

*ERQ (LC, PLC, MSLC...)*

abgehende Verbindungsaufbau-
Anfrage-Nachricht gemäß
Q.2630.3 Signalisierung;

TC Parameter abgeleitet von
erhaltenen LC Parameter Werten

Eingehende
Verbindungsaufbau-Anfrage-
Nachricht gemäß Q.2630.2
Signalisierung;

Kein TC Parameter

*LC:*     *Anschluss-Eigenschaften*
*PLC:*    *Bevorzugte Anschluss-Eigenschaften*
*MSLC:*  *Modifizierungs-Unterstützung für Anschluss-Eigenschaften*

*TC:*     *Transfer-Eigenschaften*
*PLC:*    *Bevorzugte Transfer-Eigenschaften*
*MSxy:*  *Indikation der Modifizierungs-Unterstützung für Transfer-Eigenschaften und Anschluss-Eigenschaften*

Fig. 14

1

AAL2
Schalteinheit mit
CS3
Signalisierungs-
Unterstützung

Übergang von LC zu TC
und von PLC zu PTC
Parameter

*MOD (TC, LC, ...)*

*MOD (LC, ...)*

abgehende Modifizierungs-
Nachricht gemäß Q.2630.3
Signalisierung;

TC Parameter abgeleitet von
erhaltenen LC Parameter Werten

eingehende Modifizierungs-
Nachricht gemäß Q.2630.2
Signalisierung;

Keine TC Parameter

Fig. 15

EP 1 455 496 B1

2

```
                              ┌─────────────────────┐
                              │   AAL2 – IP Inter-  │
                              │   Verarbeitungsein  │
                              │        heit         │
ERQ (IPTC, PIPTC, MSIPTC, ...)│                     │ ERQ (LC, PLC, MSLC, SSISU,
          ◄───────────────────│ - Übergang von (LC, │ ...)
                              │   PLC, SSISU) zu    │ ◄────────────────
                              │   (IPTC, PIPTC)     │
                              │   Parameter         │
                              │ - Bestimmung TC Klasse│
                              └─────────────────────┘
```

┌──────────────────────────────┐                    ┌──────────────────────────┐
│ abgehende Verbindungsaufbau-  │                    │ eingehende               │
│ Anfrage-Nachricht gemäß       │                    │ Verbindungsaufbau-Anfrage-│
│ Q.IPC.CS1 Signalisierung;     │                    │ Nachricht gemäß Q.2630   │
│                               │                    │ Signalisierung           │
│ IPTC und PIPTC Parameter      │                    └──────────────────────────┘
│ abgeleitet von erhaltenen LC, │
│ PLC und SSISU Parameter       │
│ Werten                        │
└──────────────────────────────┘

SSISU:  Service spezifische Informationen

IPTC:   IP Transfer-Eigenschaft
PIPTC:  Bevorzugte IP Transfer Eigenschaft
MSxy:   Modifizierungs-Unterstützung für IP Transfer Eigenschaft

Fig. 16

2

AAL2 – IP Inter-
Verarbeitungsein
heit

- Übergang von (IPTC,
PIPTC) zu (LC, PLC,
SSISU) Parameter

*ERQ (IPTC, PIPTC, MSIPTC, ...)*

*ERQ (LC, PLC, MSLC, SSISU,*
*...)*

eingehende Verbindungsaufbau-
Anfrage-Nachricht gemäß
Q.IPC.CS1 Signalisierung;

abgehende Verbindungsaufbau-
Anfrage-Nachricht gemäß
Q.2630 Signalisierung;

LC, PLC und SSISU Parameter
abgeleitet von erhaltenen IPTC
und PIPTC Parameter Werten

EP 1 455 496 B1

Fig. 17

2

AAL2 – IP Inter-
Verarbeitungsein
heit

- Übergang von erhaltenen
LC und SSISU (wie
bestimmt oder erhalten bei
Verbindungs-Aufbau) zu
IPTC Parameter

*MOD (IPTC, ...)*

*MOD (LC, ...)*

abgehende Modifizierungs-
Nachricht gemäß Q.IPC.CS1
Signalisierung;

IPTC abgeleitet von LC und
SSISU

eingehende Modifizierungs-
Nachricht gemäß Q.2630.2
Signalisierung

EP 1 455 496 B1

Fig. 18

2003E02460DE und 2003E02720DE

Fig. 19

**MOD (LC, ...)**

AAL2 – IP Inter-Verarbeitungseinheit

- Übergang von IPTC zu LC Parameter

outgoing Modifizierungs-Nachricht gemäß Q.2630 Signalisierung;

LC, PLC und SSISU Parameter abgeleitet von erhaltenen IPTC und PIPTC Parameter Werten

**MOD (IPTC, ...)**

eingehende Modifizierungs-Nachricht gemäß Q.IPC.CS1 Signalisierung;

2